# EUROPEAN PATENT APPLICATION

(11) **EP 1 962 175 A1**
(43) Date of publication of application: **27.08.2008**
(21) Application number: 06833837.5
(22) Date of filing: 30.11.2006
(51) Int. Cl.: G06F 3/048, G06T 1/00, G09G 5/00, G09G 5/14, G09G 5/36

(54) **IMAGE DISPLAY DEVICE**

(30) Priority: 14.12.2005 JP 2005361114
(71) Applicant: Yappa Corporation, Chiyoda-ku Tokyo 100-6332 (JP)
(72) Inventor: ITO, Masahiro, Tokyo 104-0054 (JP)
(74) Representative: Thinat, Michel
(86) International application number: PCT/JP2006/324034
(87) International publication number: WO 2007/069471

(57) **Abstract**

Provided is an image display device enabling a visual and intuitional operation of a display image. The image display device includes:
- display image operation means for operating and selectively displaying a plurality of pre-stored images by using a button or a pointing device;
- and image display means for three-dimensionally displaying a first image group formed by a plurality of images arranged at the centre from the front to the rear like upright leaves and a second and a third image group arranged a predetermined interval like the first image group in perspective on the same display screen.

## Description

### Technical Field

The present invention relates to an image display device, and particularly to an image display device for three-dimensionally displaying a plurality of images accumulated in an electronic device on a display screen.

### Background Art

In order to display numerous images on the display screen of a computer based on image data, the image data is commonly reduced to form thumbnails displayed in the form of an index or list. The display of thumbnail images is widely used in many application programs. Many image display devices provided in digital cameras, cellular telephones, and portable music players, or configured of a television monitor receiving input from a DVD (Digital Versatile Disc) player or the like, display thumbnails on a display screen divided into four, nine, or sixteen display regions, for example.

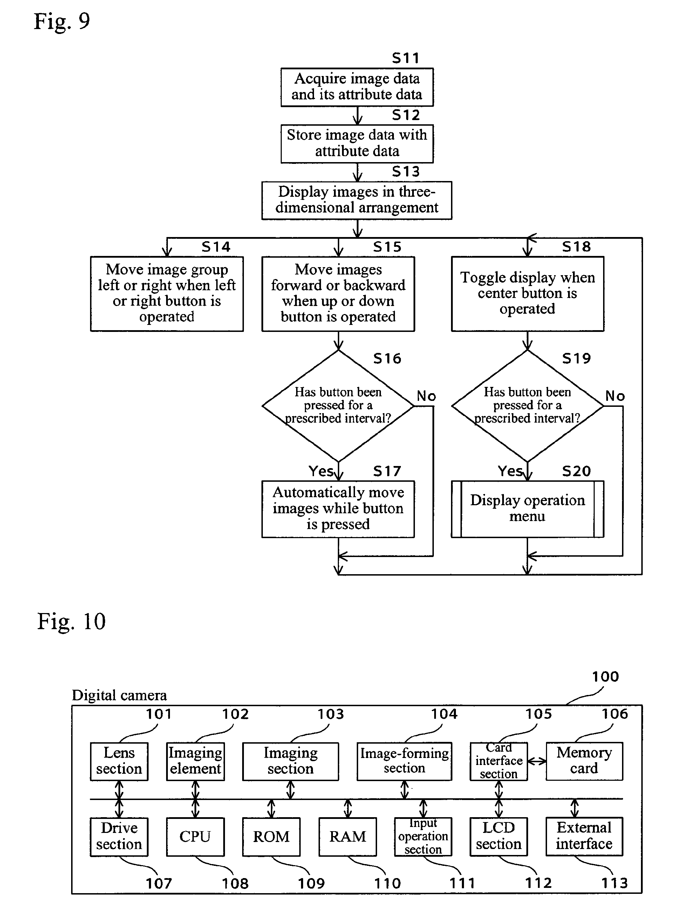

Fig. 10 shows the structure of a common digital camera equipped with this type of image display device. As shown in Fig. 10, a digital camera 100 includes an input operation section 111 for accepting various input, and a liquid crystal display (LCD) section 112 for displaying captured images. The digital camera 100 acquires an image of scenery or the like from light focused through a lens section 101 onto an imaging element 102, such as a CCD (charge coupled device) or a CMOS (complementary metal-oxide-semiconductor), and converts this image to digital data through signal processing in an imaging section 103. The converted digital data is stored in flash memory or another nonvolatile memory (not shown) built into the digital camera 100 or saved onto an external memory card 106 via a card interface section 105. At this time, the image data is compressed (encoded) according to the JPEG (Joint Photographic Experts Group) format or the like in an image-forming section 104 prior to saving. The image-forming section 104 has a codec function (a function to encode and decode data) implemented by a hardware engine and also performs a process to read and decode compressed image data to display images on the LCD section 112. The digital camera 100 is also internally provided with a CPU (central processing unit) 108 for controlling the above processes, a ROM (read-only memory) 109 storing programs for implementing the processes, a RAM (random access memory) 110 used as a work area when processing captured images and the like, a drive section 107 for focusing and zooming the lens section 101, and an external interface 113 configured of a USB (Universal Serial Bus) connection or the like for connecting the digital camera 100 to a television set or PC (personal computer) and transmitting video signals to the television set for displaying images or exchanging image data with the PC.

However, if a large number of thumbnails is displayed on a digital camera, cellular telephone, or other portable electronic device having a limited display screen size or on a television set or the like with poorer quality image resolution, the viewer may have difficulty recognizing the image content. As a result, it is necessary to reduce the number of images displayed on the display screen to a number that can actually be identified or to display a list of titles or filenames to aid the viewer in recognizing and more quickly retrieving images, but this method misses the original objective of enabling the user to retrieve images quickly and intuitively.

To resolve this problem, Patent Reference 1 discloses a technique for displaying thumbnails for a group of files in a three-dimensional state with a portion of the thumbnail images overlapping, rather than simply displaying thumbnails in a single two-dimensional plane.

Patent Reference 1: Japanese unexamined patent application publication No. 2000-105772

### Disclosure of the Invention

### Problems to be Solved by the Invention

While the display method of Patent Reference 1 succeeds in avoiding the problem of displayed images being set so small as to be unidentifiable, this technique requires complex operations for selecting images that are not intuitive.
Therefore, it is an object of the present invention to provide an image display device for arranging images three-dimensionally in perspective as partially overlapping pages so that a user can visually and intuitively manage the displayed images.

### Means for Solving the Problems

These objects and others will be attained by an image display device according to Claim 1 of the invention comprising display image operating means for manipulating a plurality of pre-stored images through buttons or a pointing device to select and display images; and image displaying means for displaying on the same display screen in three-dimensional perspective a central first image group having a plurality of images arranged as pages overlapping sequentially from top to bottom, and second and third image groups disposed one on either side of the first image group at a prescribed distance therefrom and having a plurality of images arranged as fanned out pages overlapping sequentially from top to bottom with a portion of the images displayed on the display screen.
The image display device according to Claim 2 further comprises attribute data displaying means for displaying data related to a topmost image in the first image group in one section of the display screen, the attribute data including at least a name identifying the image, a date, and an image number indicating the order of the image in the image group.
The image display device according to Claim 3 further comprises group name displaying means for displaying the group name of the first image group in the center of the display screen in one portion of the display screen.
The image display device according to Claim 4 further comprises image group moving means having four operating buttons in top, bottom, left, and right positions for selecting and operating a plurality of images, whereby operating the left or right operating button moves the first image group left or right with animated movement to be displayed as a new second or third image group, and moves the second or third image group to the center position with animated movement to be displayed as a new first image group.
The image display device according to Claim 5 further comprises image moving means having four operating buttons in top, bottom, left, and right positions for selecting and operating a plurality of images, whereby operating the top or bottom operating buttons moves images in each of the first through third image groups sequentially from bottom to top or from top to bottom with animated movement.
In the image display device according to Claim 6, the image moving means automatically moves images in each of the first through third image groups sequentially from bottom to top or from top to bottom after the top or bottom operating button has been pressed and held for a prescribed interval and as long as the operating button is continually pressed.
The image display device according to Claim 7 further comprises image display switching means having four operating buttons in top, bottom, left, and right positions and a fifth operating button in the center of the four operating buttons for selecting and operating a plurality of images, whereby operating the fifth operating button in the center toggles between a display in which the second and third image groups are not displayed and the topmost image of the first image group is enlarged to fit the entire display screen, and the original display including the first through third image groups with animated movement.
In the image display device according to Claim 8, the image display switching means displays an operation menu for retrieving at least an image group name and an image file name when the fifth operating button is pressed and held for a prescribed interval.

The image display device according to Claim 9 comprises display image operating means for manipulating a plurality of pre-stored images through buttons or a pointing device to select and display images; and image displaying means for displaying on the same display screen in three-dimensional perspective a central first image group having a plurality of images arranged as pages overlapping sequentially from top to bottom, and second and third image groups disposed one on either side of the first image group at a prescribed distance therefrom and having a plurality of images arranged as fanned out pages overlapping sequentially from top to bottom with a portion of the images displayed on the display screen, and for displaying fourth and fifth image groups above and below the first image group and separated a prescribed distance therefrom in three-dimensional perspective on the same display screen, as appropriate, depending on contents to be displayed.
The image display device according to Claim 10 further comprises category selecting means for displaying a category selection menu in a portion of the display screen with the three-dimensionally displayed image groups for selecting an image group in order to manage individual images within the group and for displaying the selected image group as the central first image group.
The image display device according to Claim 11 further comprises image group moving means having four operating buttons in top, bottom, left, and right positions for selecting and operating a plurality of images, whereby operating the left or right operating button moves the first image group left or right with animated movement to be displayed as a new second or third image group, and moves the second or third image group to the center position with animated movement to be displayed as a new first image group, and for highlighting a category corresponding to the selected image group in the category selection menu.
The image display device according to Claim 12 further comprises image group moving means having four operating buttons in top, bottom, left, and right positions for selecting and operating a plurality of images, whereby operating the left or right operating button moves the first image group left or right with animated movement to be displayed as a new fourth or fifth image group, and moves the fourth or fifth image group to the center position with animated movement to be displayed as a new first image group, and for highlighting a category corresponding to the selected image group in the category selection menu.
The image display device according to Claim 13 further comprises description window displaying means having four operating buttons in top, bottom, left, and right positions and a fifth operating button in the center of the four operating buttons for selecting and operating a plurality of images, whereby operating the central fifth operating button removes the category selection menu from the display screen with animated movement and displays a description window related to the topmost image of the first image group in the center of the display screen overlapping the display of the first through third image groups.
The image display device according to Claim 14 further comprises video footage displaying means for removing the description window and the first through third image groups from the display screen and for expanding video footage related to the topmost image displayed on the first image group to fill the entire display screen when the fifth operating button is operated while the description window is displayed by the description window displaying means.
The image display device according to Claim 15 further comprises operation menu displaying means having a sixth operating button for initiating an operation on the displayed images, whereby operating the sixth operating button displays an operation menu related to the topmost image of the first image group in a portion of the display screen overlapping the display of the first through image groups.

The image display device according to Claim 16 further comprises image data decoding means having a hardware decoder for developing a portion of image data among digital image data stored on the image display device that includes image data for the image groups displayed three-dimensionally on the same display screen in a work area of memory, and a three-dimensional drawing engine for drawing image data developed in the work area in an image memory for data to be displayed on the display screen.
In the image display device according to Claim 17, the image data decoding means reads image data in advance for a portion of images to be displayed when the display image operating means is next operated, and develops this image data in the work area.
The image display device according to Claim 18 further comprises bookmark adding means for adding a bookmark identifiable by color or symbol to one or a plurality of the top, bottom, left, and right edges of an image on the display screen for identifying the image.
In the image display device according to Claim 19, a plurality of images stacked from top to bottom and displayed three-dimensionally by the image displaying means is displayed with gradually diminishing contrast from top to bottom.
In the image display device according to Claim 20, the operations of the display image operating means are implemented through buttons or a pointing device on the image display device itself or on a remote controlling device connected to the image display device through wireless communication of infrared or electromagnetic signals.

### Effects of the Invention

By arranging a plurality of images as partially overlapping pages in a three-dimensional display, the present invention enables a user to browse displayed images on display screens that are small or have low-quality resolution when the user wishes to retrieve specific images and enables the user to visually and intuitively manage the images.

### Brief Description of the Drawings

Fig. 1 is a schematic diagram of an image display device according to a first embodiment of the present invention;
Fig. 2 shows a sample display on a display screen of the image display device in Fig. 1;
Fig. 3 shows a sample display on the display screen in Fig. 2 when image groups have been shifted to the right;
Fig. 4 shows a sample display on the display screen in Fig. 2 when the image groups have been shifted to the left;
Fig. 5 shows a sample display on the display screen in Fig. 2 when images have been shifted forward one step;
Fig. 6 shows a sample display on the display screen in Fig. 2 when an image has been enlarged to fill the entire display screen;
Fig. 7 is a block diagram showing various means of an application program installed on the image display device of Fig. 1;
Fig. 8 is an explanatory diagram showing sample content of attribute data shown in Fig. 7;
Fig. 9 is a flowchart illustrating steps in a display operation performed on the image display device of Fig. 1;
Fig. 10 is a block diagram showing the structure of a common digital camera;
Fig. 11 is a schematic diagram of the display screen in an image display device according to a second embodiment of the present invention;
Fig. 12 is a schematic diagram of an operating unit on the image display device shown in Fig. 11;
Fig. 13 is a schematic diagram showing an alternate configuration of the display screen in the image display device shown in Fig. 11;
Fig. 14 is a schematic diagram showing a sample configuration of the display screen in the image display device of Fig. 11 when an image group has been specified;
Fig. 15 shows a sample display on the display screen of the image display device in Fig. 11;
Fig. 16 shows a sample display on the display screen shown in Fig. 14;
Fig. 17 shows a sample display of the image groups shown in Fig. 16;
Fig. 18 shows an example of the display screen in Fig. 16 when displaying an image operation/editing menu;
Fig. 19 shows an example of the display screen in Fig. 17 when displaying a description for the image in the foreground;
Fig. 20 shows an example of the display screen in Fig. 17 when the image in the foreground has been enlarged to fit the entire display screen;
Fig. 21 shows television listings displayed on the image display device according to the second embodiment;
Fig. 22 shows the display screen of Fig. 21 after the user has scrolled down to select a TV program;
Fig. 23 shows the display screen of Fig. 21 after the user has scrolled leftward to select a TV program;
Fig. 24 shows the display screen of Fig. 21 after the user has scrolled rightward to select a TV program;
Fig. 25 shows an example of animation in the display screen of Fig. 21 after the user has specified a TV program and before the description has been displayed;
Fig. 26 shows a sample display on the display screen of Fig. 21 after the description for the specified TV program has been displayed;
Fig. 27 is an explanatory diagram showing sample content of an image operation/editing menu displayed on the display screen of Fig. 18;
Fig. 28 is a flowchart illustrating steps in a process for performing display operations in the image display device of Fig. 11;
Fig. 29 is an explanatory diagram illustrating an image decoding process performed when displaying images on the display screen of the image display device shown in Fig. 1 and Fig. 11; and
Fig. 30 is a block diagram showing the general structure of a common DVD recorder.

### Description of the Reference Numerals and Signs

- 1: image display device
- 2: display screen
- 3: operating unit
- 11: central controller
- 12: image data acquiring means
- 13: image data storing means
- 14: displaying means
- 14a: image displaying means
- 15: inputting means
- 15a: display screen operating means
- 16: image processing means
- 16a: image group scrolling means
- 16b: image scrolling means
- 16c: image display switching means
- 17: attribute data processing means
- 17a: attribute data displaying means
- 17b: group name displaying means
- 17c: bookmark adding means
- 21: first image group
- 22: second image group
- 23: third image group
- 24: group name display section
- 25, 45: attribute data display section
- 31: left button
- 32: right button
- 33: up button
- 34: down button
- 35: fifth operating button ("Yes")
- 36: sixth operating button ("Menu")
- 37: seventh operating button ("No")
- 41: fourth image group
- 42: fifth image group
- 43: category selection menu display section
- 46: subcategory selection menu display section
- 100: digital camera
- 101: lens section
- 102: imaging element
- 103: imaging section
- 104: image-forming section
- 105: card interface section
- 106: memory card
- 107: drive section
- 108, 210: CPU
- 109, 211: ROM
- 110, 212: RAM
- 111, 213: input operation section
- 112, 214: LCD section
- 113, 215: external interface
- 200: DVD recorder
- 201: motor
- 202: laser diode and pickup device
- 203: HDD
- 204: digital video/audio processor
- 205: analog video/audio processor
- 206: remote control interface section
- 207: infrared remote controller
- 208: motor drive section
- 209: laser control section

### Best Mode for Carrying Out the Invention

Next, preferred embodiments of the present invention will be described while referring to the accompanying drawings.

### First Embodiment

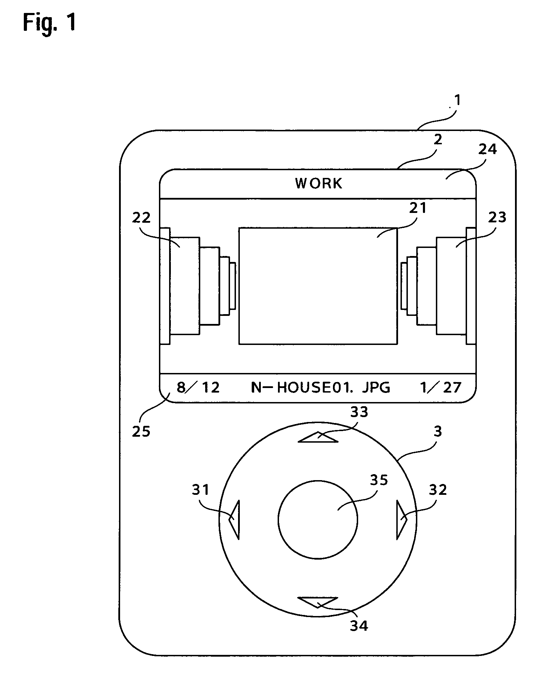

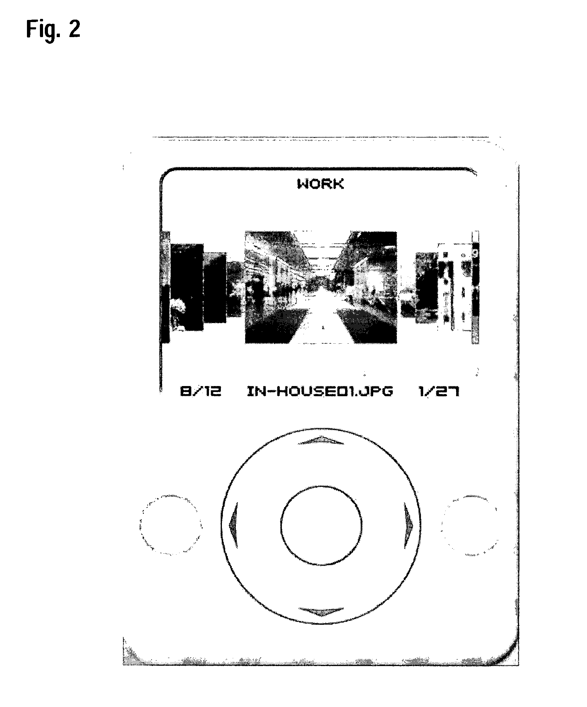

Fig. 1 is a schematic diagram of an image display device according to a first embodiment of the present invention. Fig. 2 shows a sample display on a display screen of the image display device in Fig. 1.
An image display device 1 shown in Fig. 1 is an embodiment of the present invention applied to a portable image display device. The image display device 1 includes a display screen 2 configured of an LCD or the like for displaying images, and an operating unit 3 including a plurality of operating buttons.
A first image group 21 including a plurality of images grouped together is displayed in a central region of the display screen 2. A second image group 22 and a third image group 23 are displayed in left and right regions of the display screen 2 so that a portion of each group is visible. The images in these first through third image groups 21-23 are arranged as overlapping pages stacked from top to bottom, with the images and image groups being displayed in a three-dimensional perspective on the same display screen. The images in the second and third image groups are displayed with a gradually diminishing contrast from the top image to the bottom.
The operating unit 3 enables a user to manage images displayed on the display screen 2. The operating unit 3 includes four operating buttons arranged in left, right, top, and bottom positions for leftward, rightward, upward, and downward movements, and fifth operating button in the center. Specifically, the operating buttons include a left button 31, a right button 32, an up button 33, a down button 34, and a fifth operating button 35 used for selecting or specifying images and the like.

A group name display section 24 is provided in the top of the display screen 2 for displaying the group name of the first image group 21 displayed in the center of the display screen 2, such as "Friends," "Work," or "Family." An attribute data display section 25 is provided in the bottom of the display screen 2 for displaying attribute data related to the topmost image of the first image group 21 displayed in the center. The attribute data may include the captured date, image filename, and image number indicating the ordered position of the image relative to the other images, such as "8/12 IN-HOUSE01.JPG 1/27."

Next, the functions of operating buttons in the operating unit 3 and the display screen in the display screen 2 resulting from these operations will be described.
When the user operates the left button 31, the second image group 22 displayed in the left side of the display screen 2 moves farther leftward, disappearing from the display screen 2; the first image group 21 in the center moves to the left and is displayed as the new second image group; the third image group 23 displayed on the right moves to the center and is displayed as the new first image group; and a new third image group emerges from the right edge of the display screen 2 to be displayed in the right side thereof. The images displayed three-dimensionally on the display screen 2 move and change continuously through animation. As the image groups are moved, the group name displayed in the group name display section 24 changes to the corresponding name.
When the right button 32 is operated, the images and image groups displayed on the display screen 2 move rightward in the direction opposite that when the left button 31 is operated. This movement is also displayed smoothly through three-dimensional animation.

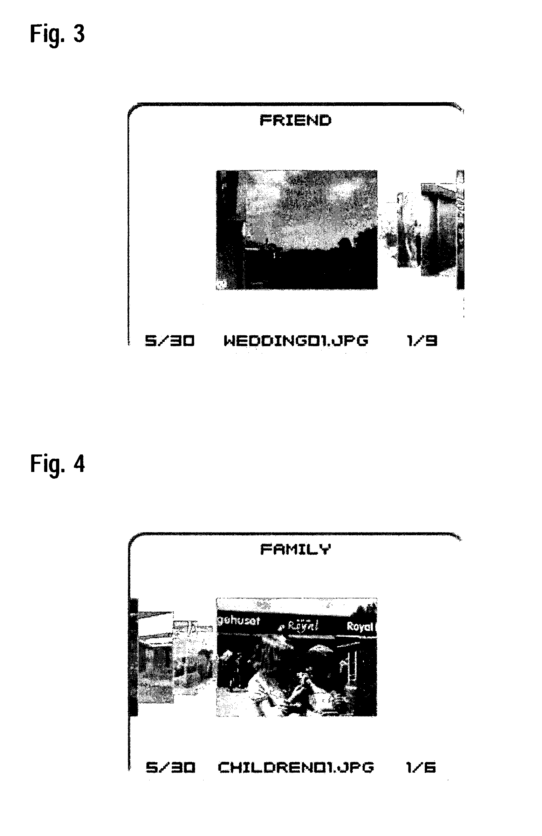

When the leftmost image group "Friends" is displayed in the display screen 2, as shown in Fig. 3, an image group corresponding to the second image group 22 is not displayed in the left of the display screen 2, but only the center first image group 21 and the right third image group 23 are displayed. Further, operation of the left button 31 is disabled. However, it is also possible to configure the groups in a loop so that the rightmost image group appears in the left of the display screen 2 at this time.
When the rightmost image group "Family" is displayed in the display screen 2, as shown in Fig. 4, as when the leftmost image group was displayed in Fig. 3, an image group corresponding to the third image group 23 is not displayed in the right of the display screen 2, but only the center first image group 21 and the left second image group 22 are displayed. However, the image groups may be configured in a loop so that the leftmost image group appears in the right of the display screen 2 at this time.

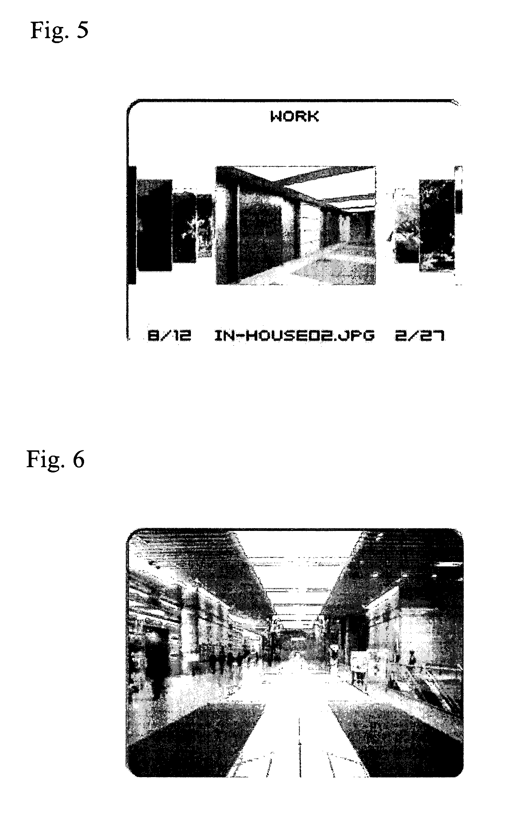

When the up button 33 is operated, as illustrated in Fig. 5, the topmost image of each of the first through third image groups 21-23 displayed on the display screen 2 disappears from the display screen 2 and the image displayed below the topmost image in each image group moves to the front through three-dimensional animation, with the image "8/12 IN-HOUSE02.JPG 2/27" being displayed on top in the first image group 21. When the last image of a group is displayed on top, operation of the up button 33 is disabled. However, the images of each group may be configured in a loop so that the first image is redisplayed when the up button 33 is operated.
When the down button 34 is operated, images are switched in reverse order to the order switched with the up button 33. When the first image is displayed on top of an image group, operation of the down button 34 is disabled. Otherwise, images of the first through third image groups 21-23 are moved to the front one at a time through 3D animation. While the operation of the down button 34 is disabled when the first image of a group is displayed, the images may be configured in a loop so that the last image is displayed over the topmost image when the down button 34 is operated.
The up button 33 and down button 34 have a repetition function so that when the buttons are pressed and held for a prescribed time, the images of each image group automatically begin to switch in sequence from top to bottom or from bottom to top, respectively. The repetition function is halted when the up button 33 or down button 34 is released, maintaining the display of images at that point.

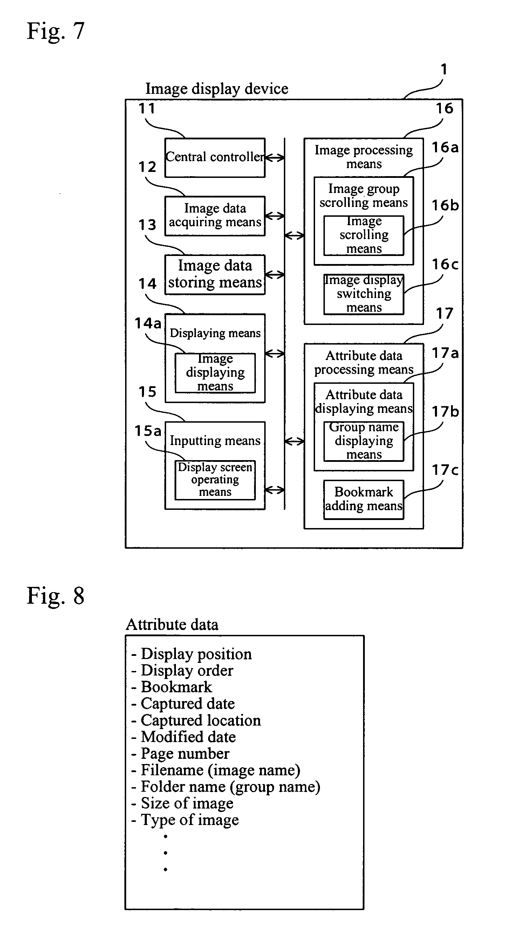

The user specifies the topmost image of the first image group 21 by operating the fifth operating button 35 positioned in the center of the four operating buttons 31-34. At this time, images in the second image group 22 and third image group 23 continuously and sequentially disappear from the display screen through animation, and the topmost image in the first image group 21 is enlarged through animated movement to fill the entire display screen 2, as shown in Fig. 6. When the fifth operating button 35 is operated again, the original display on the display screen 2 is restored, with the first image group 21 once again arranged in the center and the second image group 22 and third image group 23 on the sides.
By pressing and holding the fifth operating button 35 for a prescribed time, the user can display an operation/editing menu for the image in the foreground that includes attribute data, such as that shown in Fig. 8.

Fig. 7 is a block diagram showing various means for displaying images according to the present invention, which means are implemented either in hardware provided in the image display device 1 or by a software application installed on the image display device 1. A detailed description of a hardware structure will not be given herein.
The image display device 1 includes a central controller 11 for integrating the various means to display images, as described above. An image data acquiring means 12 of the image display device 1 functions to acquire digital image data for images captured by a digital camera, edited on a PC or the like, and compressed in the JPEG format, for example, from a memory card (not shown) mounted in the image display device 1 or through a USB interface or the like (not shown) together with attribute data, such as the captured date and filename. An image data storing means 13 of the image display device 1 stores the image data acquired by the image data acquiring means 12 in a storage device (not shown) of the image display device 1, such as flash memory or a hard disk drive (HDD).

A displaying means 14 of the image display device 1 is provided with LEDs or other indicators, an operation/editing menu, and an image displaying means 14a for arranging images on the display screen 2 as pages partially overlapping from top to bottom, for forming the first through third image groups, and for displaying these images and image groups in a three-dimensional perspective.
An inputting means 15 of the image display device 1 is provided with a display screen operating means 15a for managing images displayed on the display screen 2 based on operations of the operating buttons 31-35 in cooperation with the various means associated with the displaying means 14 and the like.

An image processing means 16 of the image display device 1 employs an image data decoding means (not shown) to develop (decode) image data compressed (encoded) in the JPEG format or the like and stored by the image data storing means 13 in a work area of RAM and employs a 3D drawing engine (not shown) to develop and draw the images three-dimensionally in an image memory (not shown) for the display screen 2. The image processing means 16 includes an image scrolling means 16b for shifting images in an image group from back to front or from front to back with animation produced using the 3D drawing engine based on operations of buttons in the operating unit 3, and an image group scrolling means 16a for moving the first through third image groups 21-23 leftward or rightward. The image processing means 16 also includes an image display switching means 16c for expanding the image displayed on top of the first image group 21 to fill the display screen 2 entirely when the user selects this image, for returning the display screen 2 to its original display, or for switching displays in operation menus or the like.

An attribute data processing means 17 of the image display device 1 extracts various attribute data stored in association with the image data and transfers required data from among this attribute data to the image processing means 16 or the like for subsequent processing. As shown in Fig. 8, the attribute data may include the display position of the image on the display screen 2, the display order, a bookmark for specifying the image displayed on the display screen 2, the date and location the image was captured, a modified date indicating when the image was edited, a page number of the image within an image group, a filename indicating the name of the image, a folder name serving as the group name to which the image belongs, the size of the image, and the type of image, such as JPEG, GIF (Graphics Interchange Format), or TIFF (Tagged Image File Format).

The attribute data processing means 17 includes a group name displaying means 17b for displaying a group name, such as "Work," for the image group used as the first image group 21 on the display screen 2, and an attribute data displaying means 17a for displaying attribute data related to the image displayed on top of the first image group 21. This attribute data may include the captured date, the image filename, the page number, the total number of pages, and the like, such as "8\12 IN-HOUSE01.JPG 1/27." The attribute data processing means 17 also includes a bookmark adding means 17c implementing a bookmark function that enables the user to easily identify an image displayed on the display screen 2. This bookmark function adds a mark distinguishable by a color or symbol above or below the image, to the left or right of the image, in an edge or corner of the image, or in a plurality of such locations.

Next, steps in a process performed while the user manages images on the display screen 2 using the buttons in the operating unit 3 will be described with reference to Fig. 9.
First, the image data acquiring means 12 reads image data and attribute data related to the image, including the group name (folder name) and image name (filename), into the image display device 1 (step S11). The image data storing means 13 saves these images and attribute data in as storage area of flash memory in the image display device 1 or on a storage medium such as an HDD or memory card provided in the image display device 1 (step S12).
When the inputting means 15 receives input for an image operation, the displaying means 14 displays the image data saved in step S12 in cooperation with the attribute data processing means 17 and image processing means 16 in order to display images in image groups on the display screen 2 as partially overlapping pages and in three-dimensional perspective (step S13).

When the user operates the left button 31 or right button 32 of the operating unit 3, the image group scrolling means 16a shifts image groups on the display screen 2 leftward or rightward using animation (step S14). When the user operates the up button 33 or down button 34, the image scrolling means 16b switches images in each image group from back to front or from front to back on the display screen 2 using animation (step S15). If the user presses and holds the up button 33 or down button 34 for a prescribed time (step S16: yes), the image scrolling means 16b automatically switches images from back to front or from front to back one after another while the corresponding operating button is continually pressed (step S17).

When the fifth operating button 35 is operated, the image displayed on top of the first image group 21 in the center is selected, and the selected image is enlarged through animation to fill the entire display screen 2 (step S18). If the user presses and holds the fifth operating button 35 for a prescribed time (step S19: yes), a menu for managing or editing the image is displayed on the display screen 2 (step S20). The display returns to its original state when the fifth operating button 35 is pressed again.

### Second Embodiment

Next, an image display device using a DVD recorder to display images on a television monitor will be described as a second embodiment of the present invention. In this case, the television monitor is used as the display portion of the device, while the majority of other functions in the device are implemented by means provided in the DVD recorder.

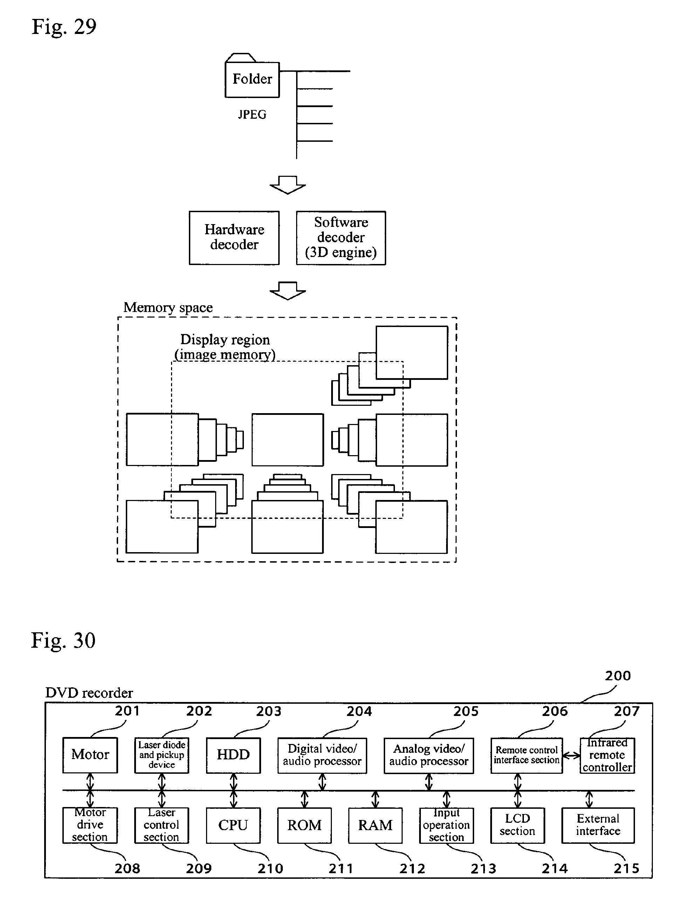

First, the structure of a common DVD recorder will be described with reference to the block diagram of Fig. 30.
A DVD recorder 200 includes a laser diode and pickup device 202, a motor 201 for rotating a disc, and a laser control section 209 and a motor drive section 208 for controlling the laser diode and pickup device 202 and the motor 201 to read data from and write data to a disc. The DVD recorder 200 also includes an optical system configured of a front-end (FE) section for processing digital data, and a back-end (BE) section for receiving processed data from the FE section and for transferring processed data to the FE section. A CPU 210, a ROM 211, and a RAM 212 are core devices provided in the DVD recorder 200 for distributing data processed within the DVD recorder 200 along various paths to each of a plurality of function blocks, such as the FE section. These devices perform integrated operations based on operation data received from an input operation section 213 to implement the various functions of the DVD recorder 200, including transferring a video signal or digital signal to an LCD section 214 or to a television monitor connected externally via an external interface 215 to be displayed thereon. Although operations can be performed on the input operation section 213 mounted in the body of the DVD recorder 200, the DVD recorder 200 is most commonly controlled by remote operations using an infrared remote controller 207 or the like via a remote control interface section 206.

The BE section includes a digital video/audio processor 204 having a codec configured in hardware for processing digital video and sound. The digital video/audio processor 204 compresses and decodes video using a compression encoding method, such as MPEG (Moving Pictures Experts Group) 2. The compressed video data is saved in an HDD 203 and can be written to a DVD. The codec of the digital video/audio processor 204 functions to decode compressed video data saved in the HDD 203 or written on a DVD to be displayed on a television monitor through the external interface 215 according to the NTSC (National Television System Committee) or PAL (Phase Alternating by Line) system, for example.
The external interface 215 may be configured of an IEEE 1394 interface for connecting to a video player or digital video camera or to a LAN connecting function for connecting to the Internet or an external PC.
The DVD recorder 200 is also provided with a common television tuner (not shown), and an analog video/audio processor 205 for processing analog signals.
The DVD recorder 200 is also commonly provided with a still image codec for retrieving and editing video footage or other video images, and for displaying JPEG images recorded on a DVD, and a function for capturing and saving a frame of the video as a still image.

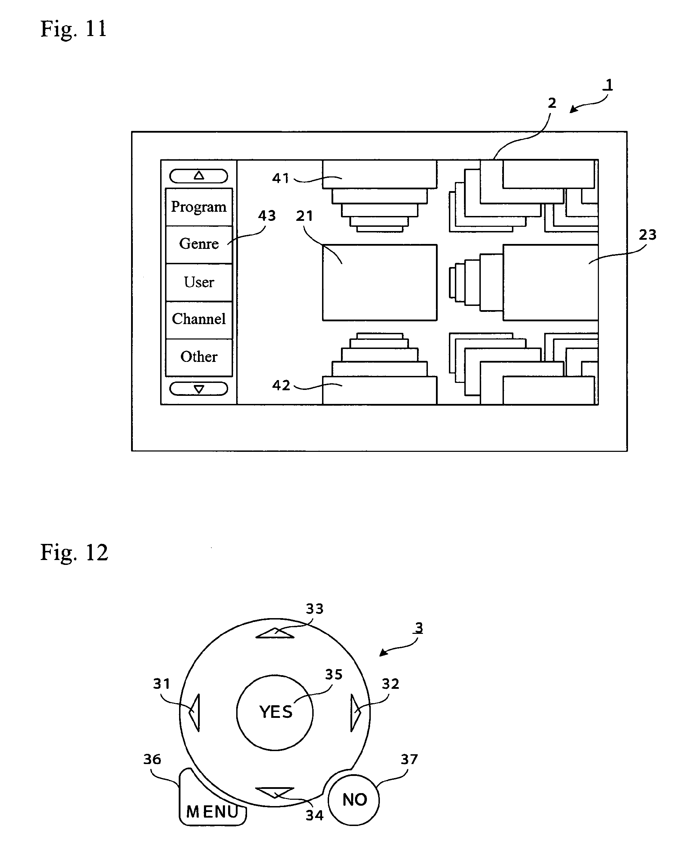

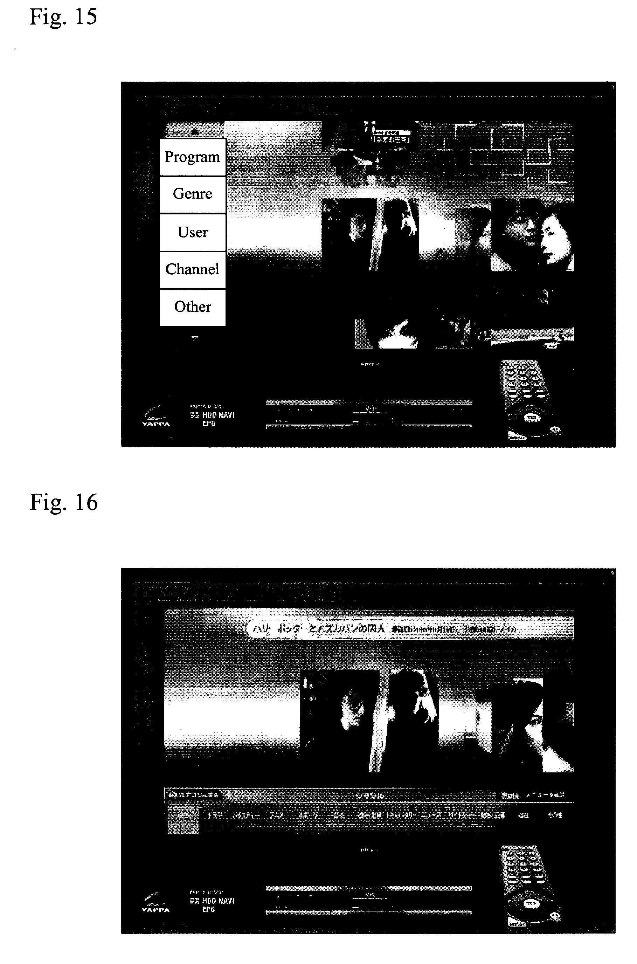

Fig. 11 is a schematic diagram of a display screen on the image display device according to the second embodiment. Fig. 15 shows a sample display screen on this image display device. Fig. 12 is an example of an operating unit for operating the image display device. The user operates the image display device 1 using an infrared remote control device (remote controller). The operating unit 3 shown in Fig. 12 shows some of the operating buttons related to managing images with the remote controller. The remote controller is not limited to the commonly used infrared remote controller, but may be configured of a device using radio waves.
The display screen 2 provided in the image display device 1 (the DVD recorder is not shown) in Figs. 11 and 15 is a large screen video monitor configured of an LCD or a PDP (plasma display panel) of a larger size than the display screen 2 provided in the portable image display device 1 according to the first embodiment.

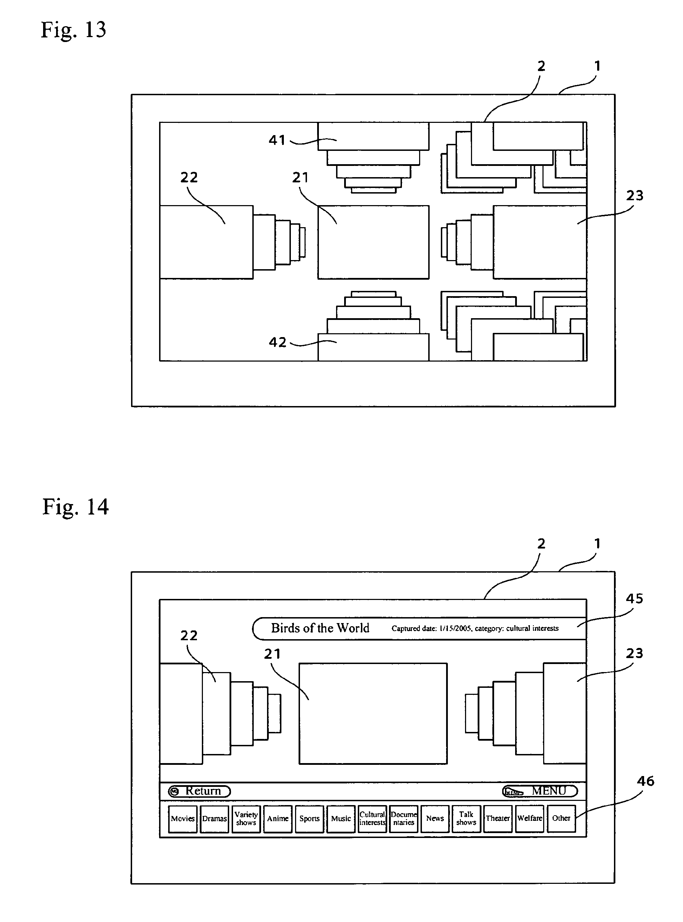

As in the first embodiment, images are arranged as partially overlapping pages on the display screen 2. As shown in Fig. 13, the images are grouped into the first image group 21 provided in the center of the display screen 2, and the second and third image groups 22 and 23 provided on left and right sides of the first image group 21, with images belonging to each image group being stacked sequentially from top to bottom and displayed in three-dimensional perspective. In addition to the left and right images groups, the display screen 2 according to the second embodiment includes fourth and fifth image groups 41 and 42 positioned above and below the first image group 21. The top and bottom fourth and fifth image groups 41 and 42 correspond to categories, while the left and right first through third image groups 21-23 correspond to subcategories. When the leftmost image group is set as the first image group 21, as shown in Figs. 11 and 15, an image group corresponding to the second image group 22 is not displayed since there exists no image group to the left of the first image group 21. However, as described in the first embodiment, the images may be configured in a loop so that the rightmost image group appears in the left at this time. Similarly, when the topmost or bottommost category has been selected, either the fourth image group 41 or the fifth image group 42 is not displayed, since there exists no more image groups on the top or bottom, respectively, unless the categories are configured in a loop.

Figs. 11 and 15 show a top screen when a DVD recorder and a television monitor are functioning as the image display device 1. Here, a category selection menu display section 43 is provided in the left of the display screen 2 and includes such categories as "program," "genre," "user," "channel," and "other." By operating the operating unit 3 shown in Fig. 12, the user can select a category of image groups in order to select and specify a desired image (category selecting means). The display region in the category selection menu display section 43 corresponding to the selected category is highlighted to notify the user which category has been selected.

The changes in the three-dimensional display of images and image groups on the display screen 2 in response to operated buttons in the operating unit 3 shown in Fig. 12, the animated movement accompanying these changes, and the means to implement these operations are identical to those described in the first embodiment and will not be repeated here. Below, only differences in movement and operations from the first embodiment will be described.
When the category selection menu display section 43 is displayed on the display screen 2, as shown in Figs. 11 and 15, the user can select one of the categories for image groups displayed in the category selection menu display section 43 by operating the up button 33 and down button 34 on the display screen 2, and subsequently pressing the fifth operating button 35 ("Yes"). If the user specifies the "genre" category, for example, the display screen 2 changes to the display shown in Figs. 14 and 16.

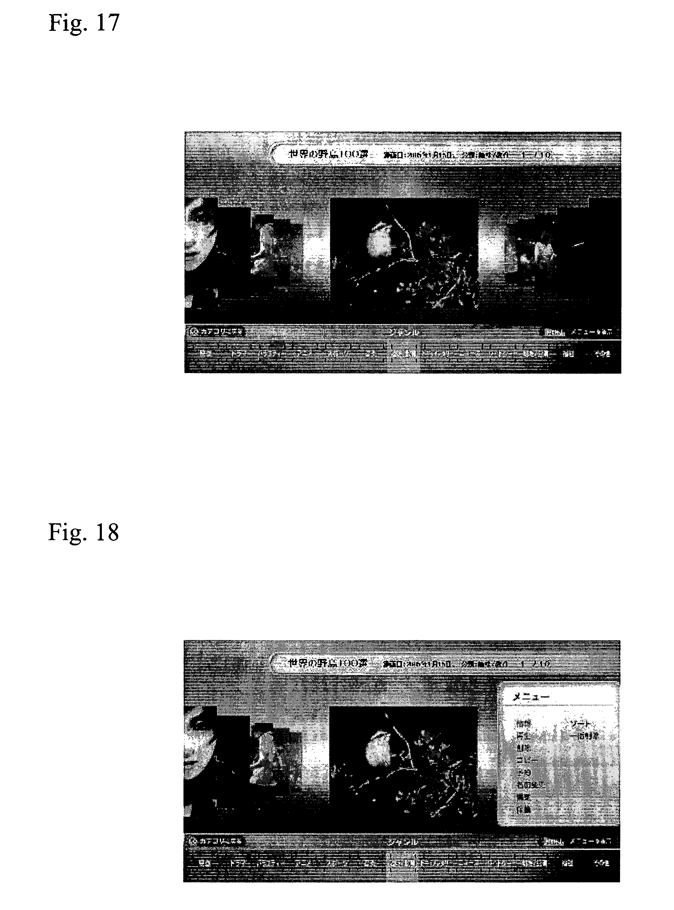

As shown in Figs. 14 and 16, a subcategory selection menu display section 46 is provided in the bottom of the display screen 2 for enabling the user to select a subcategory of image groups. The subcategories include "movies," "dramas," "variety shows," "anime," "sports," "music," "cultural interests," "documentaries," "news," "talk shows," "theater," "welfare," and "other." The display region of the subcategory selection menu display section 46 corresponding to the selected subcategory is highlighted to notify the users which subcategory has been selected. Figs. 14 and 17 show a sample display when an image group belonging to the "cultural interests" subcategory has been selected.
Subcategories beneath the category "channel," for example, may include each television station, such as "NHK General," "NHK Educational," "Nippon Television," "TBS," "Fuji Television," "TV Asahi," and "TV Tokyo." In this case, icons for the logos of the TV stations may be displayed as the subcategories. The subcategories displayed when the "user" category is selected may include names and the like of users that can be freely edited and defined.

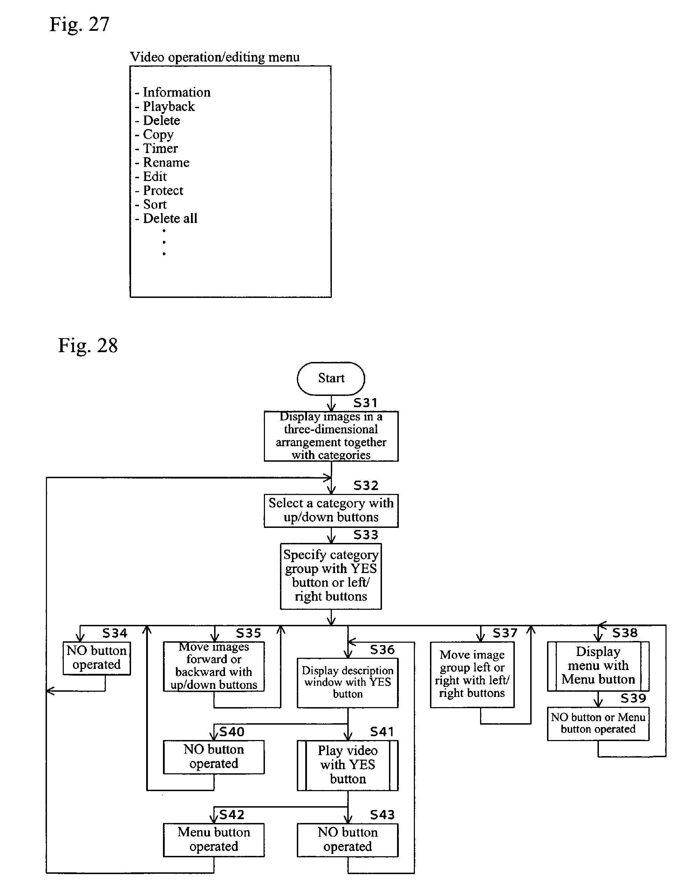

From the display screen 2 displayed in Figs. 14 and 16, changes in the three-dimensional display of images and image groups on the display screen 2 in response to operations performed on the operating buttons 31-34 in the operating unit 3 and the animated movement accompanying these changes is identical to that described in the first embodiment.
The operating unit 3 shown in Fig. 12 also includes the fifth operating button 35 ("Yes"), a sixth operating button 36 ("Menu"), and a seventh operating button 37 ("No"). Operations performed in response to these buttons will be described later with reference to the flowchart shown in Fig. 28.

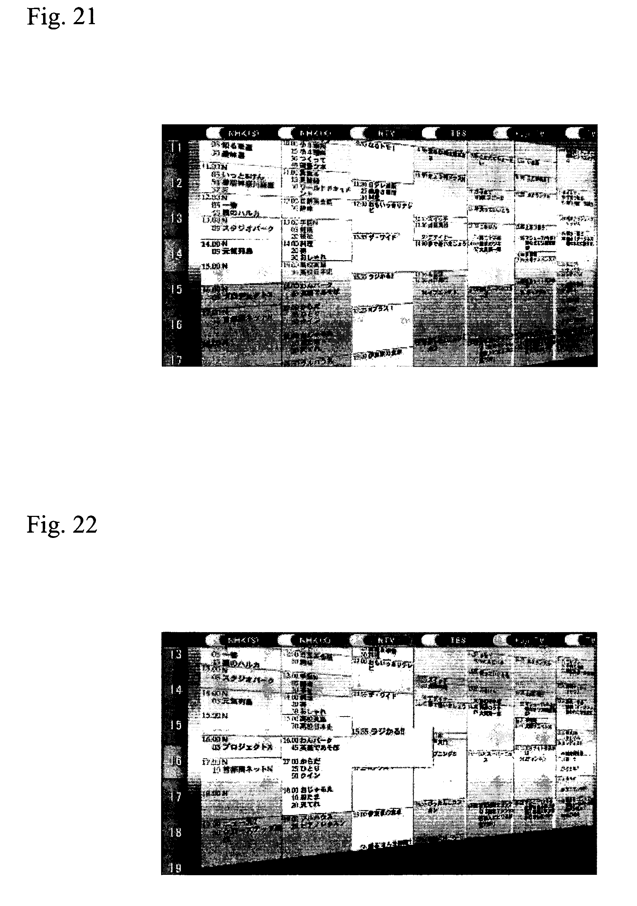

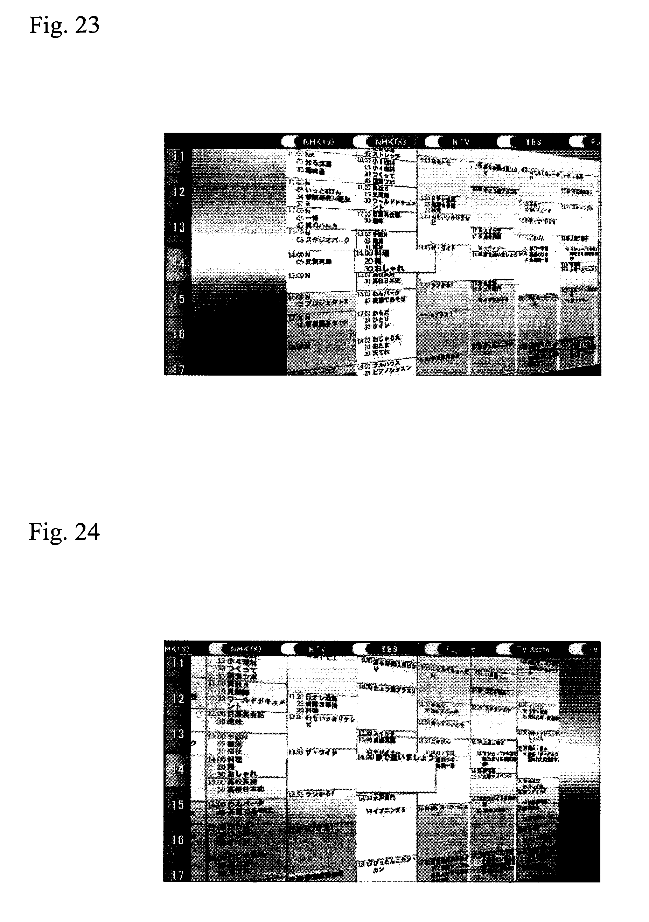

Figs. 21-26 illustrate an example of selecting displayed images when TV listings are displayed according to an electronic programming guide (EPG) in the DVD recorder.
As shown in the drawings, the TV listings are also displayed three-dimensionally. The user can select a program using the operating buttons 31-34 of the operating unit 3. Operating the operating buttons 31-34 moves the entire list of programs, and a selected program is displayed in the center of the display screen. Fig. 21 shows the display screen 2 displayed initially when the EPG is selected. Fig. 22 shows the display screen 2 after the down button 34 was operated, and Figs. 23 and 24 show the display screen 2 after the left button 31 and right button 32 were operated respectively.

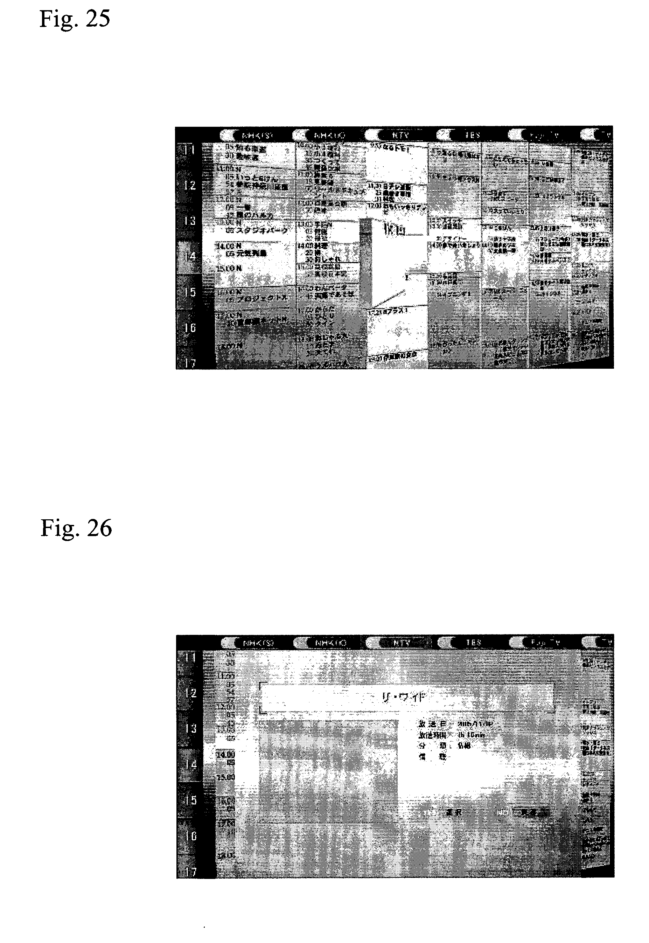

Fig. 25 illustrates animation performed immediately after the user has highlighted a program using the operating buttons 31-34 and selected the program by pressing the fifth operating button 35. In this animation, the selected program is enlarged on the display screen while being rotated in a half turn and changes to a description window as if a description is written on the back of the selected program. When the fifth operating button 35 ("Yes") is pressed again, the selected program is displayed in full-screen and the video is started. Pressing the seventh operating button 37 ("No") returns the display to the original program listings. At this time, the description window undergoes a reverse animation to that described above to rotate and reduce the size of the selected program display so as to fit back into the program listings.

Next, steps in a process performed when managing images on the display screen 2 of the image display device 1 configured of the DVD recorder and television monitor will be described with reference to Fig. 28.
In the top screen of the image display device 1 shown in Figs. 11 and 15, the DVD recorder 200 provides the category selection menu display section 43 in the left of the display screen 2, arranges the images in a fanned out arrangement, displaying these images from top to bottom in image groups in a three-dimensional perspective (step S31). At this time, the user selects a category using the up button 33 and down button 34 of the operating unit 3 shown in Fig. 12 (step S32) and specifies the category for the displayed image groups by operating the fifth operating button 35 ("Yes") or the left button 31 and right button 32 (step S33).

When a category is specified, the category selection menu display section 43 moves farther leftward with animated movement, and disappears from the display screen together with the fourth and fifth image groups 41 and 42. Further, the subcategory selection menu display section 46 appears from the bottom of the screen with animated movement, changing the display to the display screen 2 shown in Figs. 14 and 16. If the user operates the seventh operating button 37 ("No") when the subcategory selection screen is displayed as shown in Figs. 14 and 16, animation is performed in reverse of that for changing the screen from Figs. 11 and 15 to Figs. 14 and 16 (step S34). Specifically, the subcategory selection menu display section 46 disappears off the bottom of the screen, the category selection menu display section 43 appears from the left side of the screen, and the fourth and fifth image groups 41 and 42 are redisplayed to display the original top screen shown in Figs. 11 and 15. Subsequently, the process returns to S32.

Next, the user operates the left button 31 and right button 32 of the operating unit 3 in the subcategory selection screen shown in Figs. 14 and 16 to select a subcategory for displaying the first image group 21, as shown in Fig. 17 (step S37). The user then selects a desired image by operating the up button 33 and down button 34 to move images in each image group on the display screen 2 from back to front or from front to back (step S35).

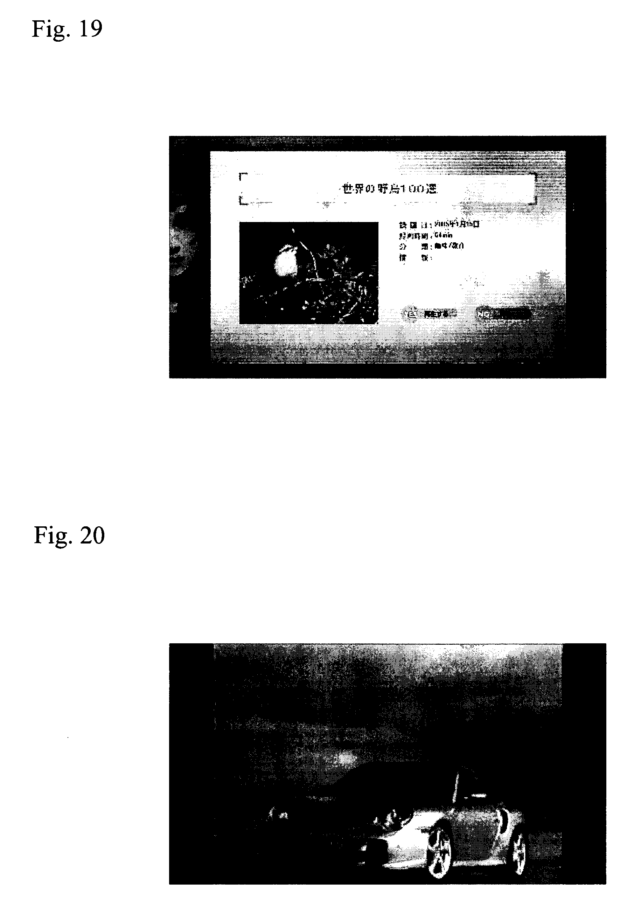

When the user operates the fifth operating button 35 ("Yes"), the subcategory selection menu display section 46 moves downward on the display screen 2 with animated movement, disappearing from the screen, and a description window for the topmost image selected from the first image group is displayed in the center of the display screen 2 over the first through third image groups 21-23, as shown in Fig. 19 (description window displaying means; step S36) . If the user operates the seventh operating button 37 ("No"), the description window disappears from the display screen 2, and the subcategory selection menu display section 46 reemerges from the bottom of the screen with animated movement, restoring the original subcategory selection screen shown in Figs. 14 and 17 (step S40).

If the user operates the fifth operating button 35 ("Yes") when the display screen 2 displays the description window shown in Fig. 19, the image described in the description window is set and a video is played in full-screen on the display screen 2, as shown in Fig. 20 (video footage displaying means; step S41). The user can operate the seventh operating button 37 ("No") while the video is playing to restore the original display screen 2 having the description window shown in Fig. 19 (step S43). Subsequently, the process returns to step S36. The user can also restore the category selection screen in the top screen shown in Figs. 11 and 15 by operating the sixth operating button 36 ("Menu") while the video is playing (step S42). Subsequently, the process returns to step S32.

Further, by operating the sixth operating button 36 ("Menu") in the subcategory selection screen shown in Figs. 14, 16, and 17, the user can display an operation/editing menu for operating or editing the video associated with the image in the foreground, as shown in Fig. 18 (step S38). The operation/editing menu lists selections enabling the user to display a description of the video, modify speed and language options, delete the video, copy the video, set a recording timer, change the title name, edit the video, protect the video from being copied, deleted, or edited, change the order for video playback or image display, and delete all videos and images. The user highlights an item in the operation/editing menu using the up button 33 and down button 34 and selects the highlighted menu item with the fifth operating button 35 ("Yes"). The user can also return to the subcategory selection screen shown in Figs. 14 and 17 by pressing the seventh operating button 37 ("No") or the sixth operating button 36 ("Menu"; step S39).

Next, internal processes performed on the image display device according to both the first and second embodiments to display images on the display screen will be described with reference to Fig. 29.
Here, each image group is defined as a folder and each image as a file. Hence, subcategories are subfolders to the main categories. Groups corresponding to folders and images corresponding to files are saved in flash memory or on the HDD. However, the actual images (still images and videos alike) are managed by addresses using a pointer or table. Since the order and names of images and image groups displayed on the display screen 2 changes according to movement or changes of the pointer or movement or changes within the table, the same image may belong to a plurality of image groups, categories, or subcategories, and the names of categories, subcategories, and images can be set arbitrarily.

While the three-dimensional display of images on the display screen 2 described above may be applied to videos as well, the following description assumes only still images.
Still images (in the case of videos, still images captured from the title screen or the like and saved) are encoded according to the JPEG format or the like and saved in files and folders as compressed image data. A hardware engine is used to perform JPEG encoded and decoding.

The decoded image data is developed in a work area of memory. The 3D drawing engine applies the developed image data to a transparent 3D object or the like as a texture and develops the resulting image in an image memory for a display region on the display screen 2. Hence, when a prescribed operation is performed, the 3D drawing engine performs a texture applying process and the like to draw and display the image (image data decoding means). Here, processes related to 3D drawing may also be performed in a work area memory where JPEG files are decoded, rather than image memory constituting the display screen 2 so that image groups not displayed in the left, right, top, or bottom areas of the display screen 2 can be read and processed in advance.

By processing in advance image data to be displayed in the left, right, top, or bottom sections of the display screen 2, three-dimensional displays on the display screen 2 can be changed more quickly when the user operates one of the left, right, up, or down buttons to avoid user frustration.
While the 3D drawing engine is preferably implemented through a hardware process, the engine may be implemented through a software process, provided that the shapes of the 3D objects are not complex and can be displayed through the above processes without causing frustrations to the user.

### Industrial Applicability

In addition to portable electronic devices including digital cameras, cellular telephones, portable music players, electronic organizers, personal digital assistants (PDAs), and notebook computers, the image display device of the present invention may also be employed in devices mounted on moving vehicles, such as car navigation systems. The present invention is also suitable for applications in display devices having poorer quality resolution, such as a television set used as the display monitor for a DVD player, DVD recorder, or the like. Images displayed in this case are not limited to photographs and video footage, but may include illustrations, animation, and other still images, as well as videos such as movies. Further, while video footage is captured and displayed three-dimensionally as a still image in the description of the embodiments, the video itself may be played three-dimensionally through future improvements in the processing capacity of the CPU, image drawing engine, and the like.

## Claims

1. An image display device comprising:
display image operating means for manipulating a plurality of pre-stored images through buttons or a pointing device to select and display images; and
image displaying means for displaying on the same display screen in three-dimensional perspective a central first image group having a plurality of images arranged as pages overlapping sequentially from top to bottom, and second and third image groups disposed one on either side of the first image group at a prescribed distance therefrom and having a plurality of images arranged as fanned out pages overlapping sequentially from top to bottom with a portion of the images displayed on the display screen.

2. An image display device according to Claim 1, further comprising attribute data displaying means for displaying data related to a topmost image in the first image group in one section of the display screen, the attribute data including at least a name identifying the image, a date, and an image number indicating the order of the image in the image group.

3. An image display device according to Claim 1, further comprising group name displaying means for displaying the group name of the first image group in the center of the display screen in one portion of the display screen.

4. An image display device according to Claim 1, further comprising image group moving means having four operating buttons in top, bottom, left, and right positions for selecting and operating a plurality of images, whereby operating the left or right operating button moves the first image group left or right with animated movement to be displayed as a new second or third image group, and moves the second or third image group to the center position with animated movement to be displayed as a new first image group.

5. An image display device according to Claim 1, further comprising image moving means having four operating buttons in top, bottom, left, and right positions for selecting and operating a plurality of images, whereby operating the top or bottom operating buttons moves images in each of the first through third image groups sequentially from bottom to top or from top to bottom with animated movement.

6. An image display device according to Claim 5, wherein the image moving means automatically moves images in each of the first through third image groups sequentially from bottom to top or from top to bottom after the top or bottom operating button has been pressed and held for a prescribed interval and as long as the operating button is continually pressed.

7. An image display device according to Claim 1, further comprising image display switching means having four operating buttons in top, bottom, left, and right positions and a fifth operating button in the center of the four operating buttons for selecting and operating a plurality of images, whereby operating the fifth operating button in the center toggles between a display in which the second and third image groups are not displayed and the topmost image of the first image group is enlarged to fit the entire display screen, and the original display including the first through third image groups with animated movement.

8. An image display device according to Claim 7, wherein the image display switching means displays an operation menu for retrieving at least an image group name and an image file name when the fifth operating button is pressed and held for a prescribed interval.

9. An image display device comprising:
display image operating means for manipulating a plurality of pre-stored images through buttons or a pointing device to select and display images; and
image displaying means for displaying on the same display screen in three-dimensional perspective a central first image group having a plurality of images arranged as pages overlapping sequentially from top to bottom, and second and third image groups disposed one on either side of the first image group at a prescribed distance therefrom and having a plurality of images arranged as fanned out pages overlapping sequentially from top to bottom with a portion of the images displayed on the display screen, and for displaying fourth and fifth image groups above and below the first image group and separated a prescribed distance therefrom in three-dimensional perspective on the same display screen, as appropriate, depending on contents to be displayed.

10. An image display device according to Claim 9, further comprising category selecting means for displaying a category selection menu in a portion of the display screen with the three-dimensionally displayed image groups for selecting an image group in order to manage individual images within the group and for displaying the selected image group as the central first image group.

11. An image display device according to Claim 10, further comprising image group moving means having four operating buttons in top, bottom, left, and right positions for selecting and operating a plurality of images, whereby operating the left or right operating button moves the first image group left or right with animated movement to be displayed as a new second or third image group, and moves the second or third image group to the center position with animated movement to be displayed as a new first image group, and for highlighting a category corresponding to the selected image group in the category selection menu.

12. An image display device according to Claim 10, further comprising image group moving means having four operating buttons in top, bottom, left, and right positions for selecting and operating a plurality of images, whereby operating the left or right operating button moves the first image group left or right with animated movement to be displayed as a new fourth or fifth image group, and moves the fourth or fifth image group to the center position with animated movement to be displayed as a new first image group, and for highlighting a category corresponding to the selected image group in the category selection menu.

13. An image display device according to Claim 10, further comprising description window displaying means having four operating buttons in top, bottom, left, and right positions and a fifth operating button in the center of the four operating buttons for selecting and operating a plurality of images, whereby operating the central fifth operating button removes the category selection menu from the display screen with animated movement and displays a description window related to the topmost image of the first image group in the center of the display screen overlapping the display of the first through third image groups.

14. An image display device according to Claim 13, further comprising video footage displaying means for removing the description window and the first through third image groups from the display screen and for expanding video footage related to the topmost image displayed on the first image group to fill the entire display screen when the fifth operating button is operated while the description window is displayed by the description window displaying means.

15. An image display device according to Claim 10, further comprising operation menu displaying means having a sixth operating button for initiating an operation on the displayed images, whereby operating the sixth operating button displays an operation menu related to the topmost image of the first image group in a portion of the display screen overlapping the display of the first through image groups.

16. An image display device according to either Claim 1 or Claim 9, further comprising image data decoding means having a hardware decoder for developing a portion of image data among digital image data stored on the image display device that includes image data for the image groups displayed three-dimensionally on the same display screen in a work area of memory, and a three-dimensional drawing engine for drawing image data developed in the work area in an image memory for data to be displayed on the display screen.

17. An image display device according to Claim 16, wherein the image data decoding means reads image data in advance for a portion of images to be displayed when the display image operating means is next operated, and develops this image data in the work area.

18. An image display device according to either Claim 1 or Claim 9, further comprising bookmark adding means for adding a bookmark identifiable by color or symbol to one or a plurality of the top, bottom, left, and right edges of an image on the display screen for identifying the image.

19. An image display device according to either Claim 1 or Claim 9, wherein a plurality of images stacked from top to bottom and displayed three-dimensionally by the image displaying means is displayed with gradually diminishing contrast from top to bottom.

20. An image display device according to either Claim 1 or Claim 9, wherein the operations of the display image operating means are implemented through buttons or a pointing device on the image display device itself or on a remote controlling device connected to the image display device through wireless communication of infrared or electromagnetic signals.
